# EUROPEAN PATENT APPLICATION

(11) **EP 1 674 026 A2**
(43) Date of publication of application: **28.06.2006**
(21) Application number: 05292735.7
(22) Date of filing: 19.12.2005
(51) Int. Cl.: A47L 9/16, B04C 5/10, B01D 45/16

(54) **Dust collecting apparatus for a vacuum cleaner**

(30) Priority: 22.12.2004 KR 2004110059; 05.08.2005 KR 2005071977
(71) Applicant: Samsung Gwangju Electronics Co., Ltd., Gwangju-city (KR)
(72) Inventor: Han, Jung-Gyun, Guemjeong-gu, Busan (KR); Seo, Ji-won, Gwangsan-gu, Gwangju-city (KR); Oh, Jang-Keun, Seo-gu, Gwangju-city (KR); Kim, Min-Ha, 201-804, Munheung Line Dongsam Apt., Buk-gu, Gwangju-city (KR)
(74) Representative: Habasque, Etienne J. Jean-François

(57) **Abstract**

A dust collecting apparatus (200) for a vacuum cleaner, for separating dust and moisture from external air, comprises a cyclone body (110) having an air inlet and an air outlet, a screen (130) mounted in the cyclone body and having a plurality of moisture passing holes (131a), and a dust receptacle (S3) engaging the cyclone body (110) to collect therein the dust and moisture separated from the air.

## Description

### CROSS-REFERENCE TO RELATED APPLICATIONS

This application claims benefit under 35 U.S.C. § 119(a) of Korean Patent Applications No. 2004-110059 filed December 22, 2004 and No. 2005-71977 filed August 5, 2005, the entire contents of which are incorporated herein by reference. This application is related to Korean Patent Application No. 2004-0110059, filed December 22, 2004, entitled Vacuum Cleaner Dust Collecting Apparatus, the subject matter of which is herein incorporated by reference in its entirety.

### FIELD OF THE INVENTION

The present invention relates to a vacuum cleaner. More particularly, the present invention relates to a dust collecting apparatus for separating dust and moisture from air, and a vacuum cleaner having the same.

### BACKGROUND OF THE INVENTION

Conventional dust collecting apparatuses are generally classified as either a dust collecting apparatus using a dust bag or a cyclone dust collecting apparatus that separates dust by a centrifugal force. Because of inconveniences of the dust bag, such as frequent replacement and relatively short lifespan, the cyclone dust collecting apparatus is often preferred. However, the cyclone dust collecting apparatus is also problematic because moisture which is not separated may flow back and block filters, such as a discharge filter, or flow into the suction motor, thereby overloading or damaging the suction motor.

### SUMMARY OF THE INVENTION

An aspect of the present invention is to solve at least the above problems and/or disadvantages, and to provide at least the advantages described below. Accordingly, an aspect of the present invention is to provide a dust collecting apparatus improved in capability of collecting moisture.

In order to achieve the above-described aspects of the present invention, there is provided a dust collecting apparatus comprising a cyclone body which comprises a cylindrical part having an air inlet and an air outlet, and a taper part; and a dust receptacle disposed under the cyclone body and connected to the taper part of the cyclone body, the taper part being sloped in a manner that an inner diameter thereof tapers from the cylindrical part toward the dust receptacle.

The dust collecting apparatus further comprises a screen mounted in the cyclone body. The screen comprises a screen cylindrical part corresponding to the cylindrical part; and a screen taper part disposed under the screen cylindrical part and corresponding to the taper part. The screen comprises a plurality of moisture passing holes. The dust collecting apparatus further comprises a dust-only receptacle mounted in the dust receptacle and connected to the screen taper part at one end. The dust collecting apparatus further comprises an electric heating member at the air inlet.

A dust collecting apparatus according to a second embodiment of the present invention, comprises a cyclone body which comprises a first space where air including dust and moisture is spun, and a second space where the moisture is separated from the air; and a dust receptacle connected to the cyclone body and which comprises a moisture-only receptacle for collecting only the separated moisture, and a dust-only receptacle for collecting only the separated dust.

The dust collecting apparatus further comprises a screen mounted in the cyclone body, thereby dividing an inside of the cyclone body into first and second spaces, and having a plurality of moisture passing holes.

The dust collecting apparatus further comprises an electric heating member mounted at the air inlet to heat the air being guided into the cyclone body through the air inlet.

A dust collecting apparatus according to a third embodiment of the present invention comprises a cyclone body separating dust and moisture from external air and discharging the separated dust and moisture through an open lower end thereof; a screen dividing an inside of the cyclone body into a first space for separating the dust, and a second space for separating the moisture, and having a plurality of moisture passing holes; and a dust receptacle connected to the lower end of the cyclone body, the screen comprising a first part having the moisture passing holes on at least one part, and a second part without moisture passing holes, the second part being disposed under the first part.

The cyclone body comprises a cylindrical part including an air inlet for drawing in the external air, and an air outlet for discharging dust-separated air, and a taper part disposed under the cylindrical part and having an inner diameter being that tapers toward the dust receptacle, the first part is formed as a cylindrical pipe corresponding to the cylindrical part, and the second part is formed as an inverse cone corresponding to the taper part.

The moisture passing holes are disposed at an upper part of the first part, which is spaced from a bottom of the dust receptacle by a predetermined height, and where more than 90% of moisture separation is performed. The moisture passing holes can be arranged in 12 rows and 4 columns along a circumferential surface of the first part. The cyclone body is wholly formed as an inverse cone, and the screen is also formed as an inverse cone corresponding to the cyclone body. The first part is spaced from the bottom of the dust receptacle by a predetermined height to be disposed where more than 90% of moisture separation is accomplished via the moisture passing holes.

The dust collecting apparatus further comprises an electric heating member mounted at the air inlet to heat the air being drawn into the cyclone body through the air inlet.

### BRIEF DESCRIPTION OF THE DRAWING FIGURES

The above aspect and other features of the present invention will become more apparent by describing in detail exemplary embodiments thereof with reference to the attached drawing figures, wherein;

FIG 1 is a perspective view of a dust collecting apparatus according to a first embodiment of the present invention;

FIG. 2 is an exploded perspective view of a cyclone body and a dust receptacle of FIG. 1;

FIG. 3 is a sectional view of FIG 1 taken along a line III-III;

FIG 4 is a perspective view of a dust collecting apparatus according to a second embodiment of the present invention;

FIG. 5 is a sectional view of FIG 4 taken along a line V-V;

FIG. 6 is an exploded perspective view of a screen and a dust-only receptacle of FIG. 4;

FIG. 7 is a perspective view of a dust collecting apparatus according to a third embodiment of the present invention;

FIG 8 is a sectional view of a dust collecting apparatus according to a fourth embodiment of the present invention;

FIG 9 is an exploded perspective view extractingly showing a screen and a dust receptacle of FIG 8;

FIG 10 is a sectional view of a dust collecting apparatus according to a fifth embodiment of the present invention; and

FIG 11 is an exploded perspective view extractingly showing a screen and a dust receptacle of FIG. 10.

### DETAILED DESCRIPTION OF THE EXEMPLARY EMBODIMENTS

Hereinafter, embodiments of the present invention will be described in detail with reference to the accompanying drawing figures.

In the following description, same drawing reference numerals are used for the same elements even in different drawings. The matters defined in the description, such as a detailed construction and elements, are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

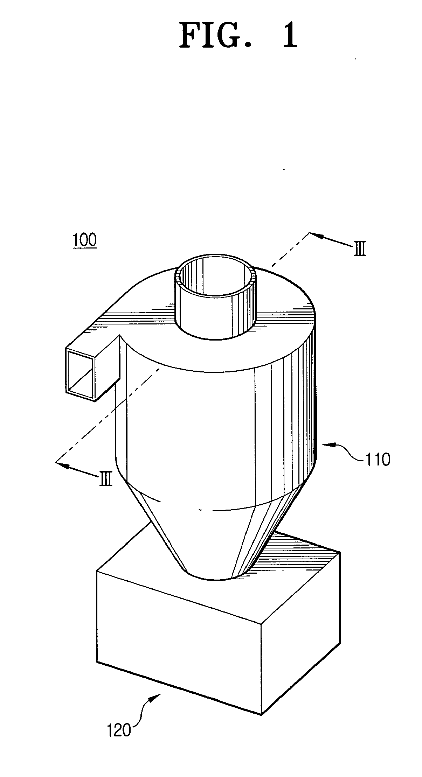

Referring to FIGS. 1 through 3, the dust collecting apparatus 100 comprises a cyclone body 110 and a dust receptacle 120. The cyclone body 110 comprises a cylindrical part 111 and a taper part 118 to separate dust and moisture from the air.

The cylindrical part 111 has an air outlet 113 on an upper surface 111a thereof to discharge clean air from which dust and moisture are separated. The air outlet 113 can be formed as a cylindrical pipe and is preferably attached to the upper surface 111a of the cylindrical part 111 by welding or by adhesive. Alternatively, the air outlet 113 may be formed integrally with the cylindrical part 111, such as by molding. Also, the air outlet 113 may have other various forms, such as a rectangular pipe. In addition, the air outlet 113 may be partly inserted in the cyclone body 110, and a grill (not shown) may be mounted at the inserted portion.

On a circumferential side 111b of the cylindrical part 111, an air inlet 115 is formed to drawn in external air including dust and moisture into the cyclone body 110, generating a centrifugal force. The air inlet 115 may be formed as a rectangular pipe attached to the circumferential side 111b of the cylindrical part 111 by welding or by adhesive for example. Alternatively, the air inlet 115 may be in other various forms, such as a cylindrical pipe, and can also be integrally formed with the cylindrical part 111, such as by molding.

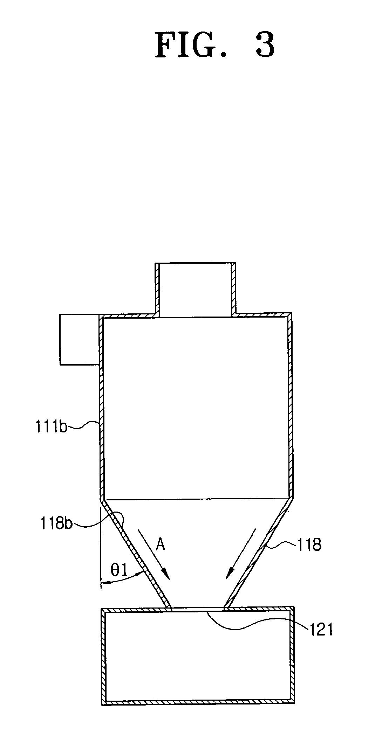

The taper part 118 is formed under the cylindrical part 111, as a lower part of the cyclone body 110, and tapers toward a dust receptacle 120. A dust outlet 118a is formed at a tapered end of the taper part 118, so that the dust and moisture, which are centrifugally separated in the cyclone body 110, are discharged therethrough. The dust outlet 118a is connected to a dust receptacle entrance 121 of the dust receptacle 120. Referring to FIG. 3, the taper part 118 is sloped by an angle θ1 of approximately 30° to 50° with respect to a circumferential side 111b.

Therefore, the separated moisture smoothly runs into the dust receptacle 120 along a slope 118b of the taper part 118 in an arrowed direction A (FIG. 3). Furthermore, due to the taper part 118 and the small size of the dust receptacle entrance 121 of the dust receptacle 120, backflow of the separated dust and moisture can be prevented. Backflow prevention is particularly important when the particle size of the moisture is larger than that of the air.

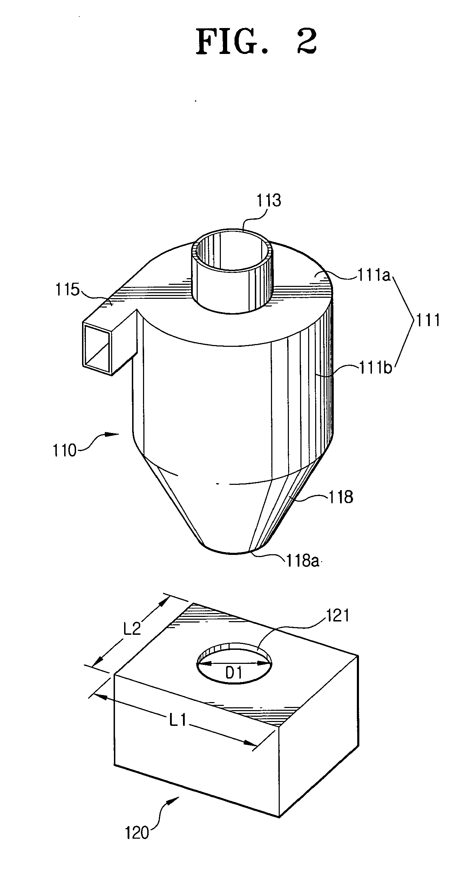

The dust receptacle 120 can be formed as a cubic container connected to a lower part of the cyclone body 110 to collect the dust and moisture separated in the cyclone body 110. The dust receptacle entrance 121 is formed on the upper surface of the dust receptacle 120 for entry of the dust and moisture. A diameter D1 (FIG. 2) of the dust receptacle entrance 121 can be smaller than width L1 and length L2 of the dust receptacle 120 because the cyclone body 110 is tapered toward the dust receptacle 120.

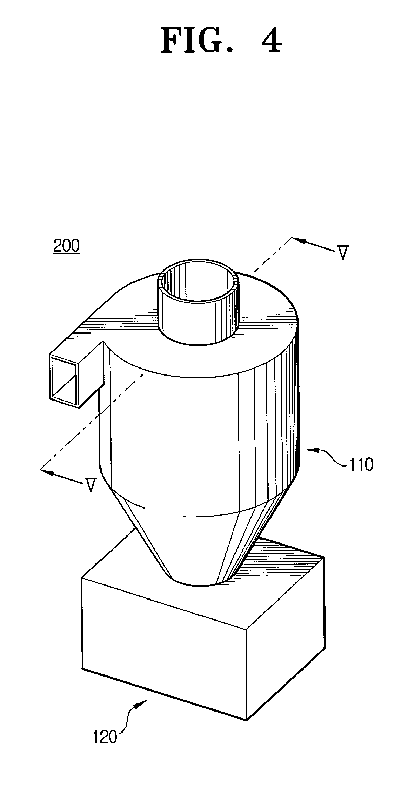

In order to improve moisture collecting efficiency and prevent the dust and moisture from being mixed with each other in the dust receptacle 120, there is suggested a dust collecting apparatus 200 according to a second embodiment of the present invention, as shown in FIGS. 4 to 6.

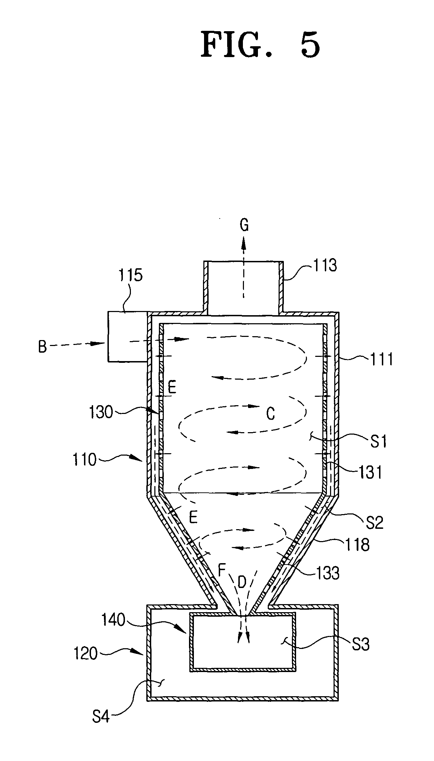

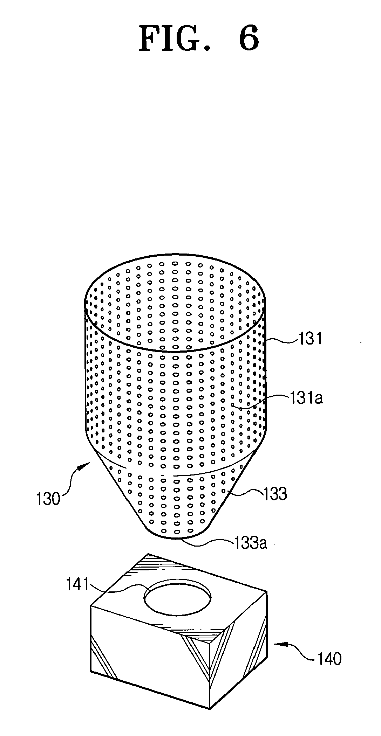

Referring to FIGS. 4 to 6, the dust collecting apparatus 200 comprises the cyclone body 110, the dust receptacle 120, a screen 130 (FIG. 6), and a dust-only receptacle 140. With reference to FIGS. 5 and 6, the screen 130 is mounted in the cyclone body 110 and comprises a plurality of moisture passing holes 131a. The screen 130 divides an inside of the cyclone body 110 into first and second spaces S 1 and S2. In the first space S1, which communicates with the air inlet 115, the dust and moisture are separated by a centrifugal force. The moisture separated in the first space S 1 flows into the second space S2 by passing through the moisture passing holes 131a. Because the moisture is condensed while passing through the narrow moisture passing holes 131a, both relatively large and small moisture particles can be captured.

In order to construct the first and the second spaces S1 and S2, the screen 130 comprises a screen cylindrical part 131 a corresponding to the cylindrical part 111 of the cyclone body 110, and a screen taper part 133 disposed under the screen cylindrical part 131 corresponding to the taper part 118. The screen cylindrical part 131 corresponds to the cylindrical part 111 of the cyclone body 110, except it has a smaller diameter than the cylindrical part 111 of the cyclone body 110 so that it can be inserted into the cyclone body 110.

The screen taper part 133 corresponds to the taper part 118 of the cyclone body 110, except it has a smaller diameter than the taper part 118 so that it can be inserted into the cyclone body 110. An exit 133a is formed at the tapered end of the screen taper part 133, through which the dust is discharged. The exit 133 is connected to a dust-only receptacle entrance 141.

Although the screen cylindrical part 131 and the screen taper part 133 do not have to exactly correspond to the cylindrical part 111 and the taper part 118 in form, having the screen cylindrical part 131 and the screen taper part 133 correspond to the cylindrical part 111 and the taper part 118, respectively, is preferred to improve collection of the dust and moisture and minimize loss of the centrifugal force. The first space S1 is disposed inside the screen 130 and the second space S2 is disposed between the screen 130 and the cyclone body 110.

The dust-only receptacle 140 can be formed as a cubic container connected to the screen 130 at one side and mounted in the dust receptacle 120. The dust-only receptacle 140 has substantially same form as the dust receptacle 120, except that it has a smaller size to be mountable within the dust receptacle 120. In addition, the dust-only receptacle entrance 141 is formed on an upper surface of the dust-only receptacle 140, through which the dust is drawn in.

By mounting the dust-only receptacle 140 in the dust receptacle 120, a moisture-only collection space S4 (FIG. 5) is formed between the dust-only receptacle 140 and the dust receptacle 120, which is fluidly communicates with the second space S2. A dust-only collection space S3 (FIG. 5) is formed within the dust-only receptacle 140, which is fluidly communicates with the first space S1. The dust is collected in the dust-only collection space S3, whereas the moisture is collected in the moisture-only collection space S4.

Referring to FIGS. 5 and 6, as a vacuum cleaner (not shown) generates the suction force, dust-laden air is drawn into the cyclone body 110 through the air inlet 115 in an arrowed direction B. The drawn-in dust and moisture spin in an arrowed direction C in the first space S1, to separate the dust and moisture. Because the dust is unable to pass through the moisture passing holes 131a, the dust falls into the dust-only collection space S3 in an arrowed direction D. The moisture passes through the moisture passing holes 131a of the screen 130 in an arrowed direction E, is drawn into the second space S2, and then is collected in the moisture-only collection space S4 in an arrowed direction F. The cleaned air from which the dust and moisture are separated is discharged from the dust collecting apparatus 200, through the air outlet 113 formed on the upper surface of the cyclone body 110 in an arrowed direction G

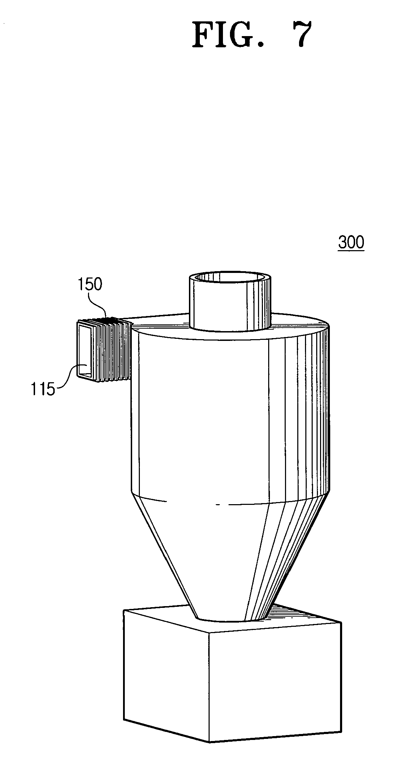

Referring to FIG. 7, a dust collecting apparatus 300 according to a third embodiment of the present invention will be described regarding only those features of the third embodiment distinctive from the other embodiments. The dust collecting apparatus 300 may be implemented by any dust collecting apparatus having the same structure as the first and the second embodiments 100 and 200. An electric heating member, for example an electric heating coil 150 can be connected to the air inlet 115. The electric heating coil 150 winds around the air inlet 115 to evaporate the moisture included in the air that passes through the air inlet 115. Instead of the electric heating coil 150, an electric heating plate may be provided to enclose the air inlet 115. Otherwise, the air inlet 115 itself may be formed as the electric heating plate.

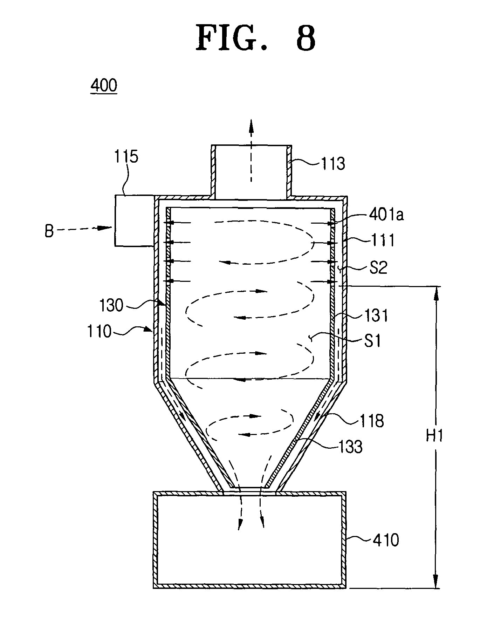

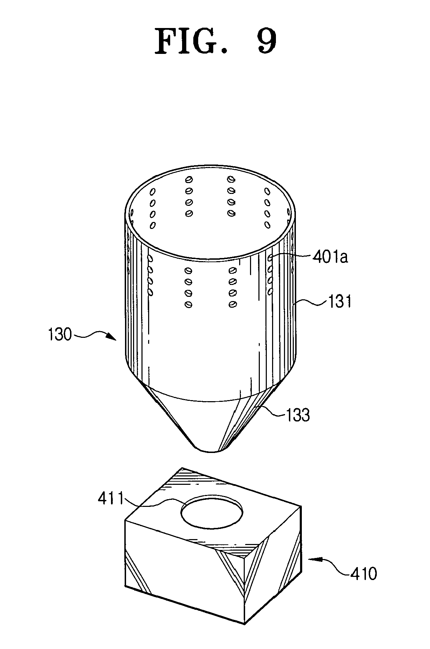

Referring to FIGS. 8 and 9, a dust collecting apparatus 400 according to a fourth embodiment of the present invention comprises the cyclone body 110, the screen 130, and a dust receptacle 410. The same elements as in the previous embodiments will be cited by the same reference numerals, omitting detailed description thereof.

The inside of the cyclone body 110 is partitioned by the screen 130 into the first space S1 wherein the dust is separated and the second space S2 wherein the moisture is separated. A lower end of the cyclone body 110 is open and connected to the dust receptacle 410. The dust and moisture separated in the first and the second spaces S 1 and S2, respectively, fall and collect in the dust receptacle 410. In order to prevent the moisture collected in the dust receptacle 410 from flowing back into the first and the second spaces S1 and S2, the screen 130 is provided with the screen cylindrical part 131 corresponding to the cylindrical part 111 of the cyclone body 110, the screen taper part 133 corresponding to the taper part 118 of the cyclone body 110, and a plurality of moisture passing holes 410a (FIG 9) formed on a circumferential surface of the screen cylindrical part 131. The distinctive feature of this embodiment is that the moisture passing holes 410a are formed at only an upper part of the screen cylindrical part 131, being spaced from a bottom of the dust receptacle 410 by a height H1, to prevent backflow of the collected moisture. According to this structure, airflow at a lower portion of the second space S2, formed between the screen taper part 133 and the taper part 118 of the cyclone body 110, can be restrained as much as possible, thereby effectively preventing backflow of the moisture. Preferably, the moisture passing holes 401a are concentrated where more than 90% of the moisture separation is performed and arranged in 12 rows and 4 columns along the upper part of the outer circumference of the screen cylindrical part 131, in order to minimize deterioration of the moisture separation effect and also prevent the backflow of the moisture.

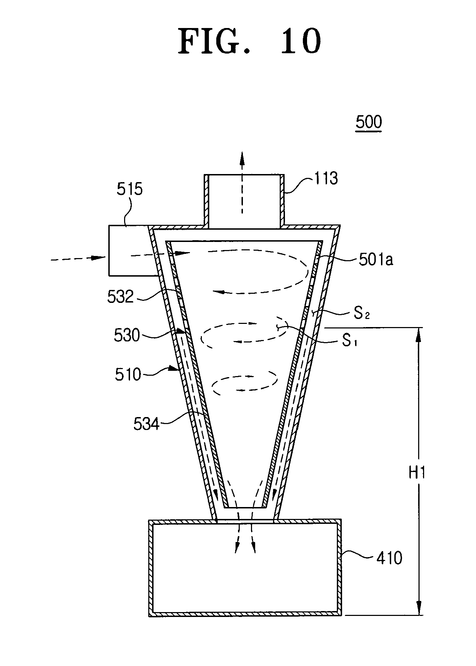

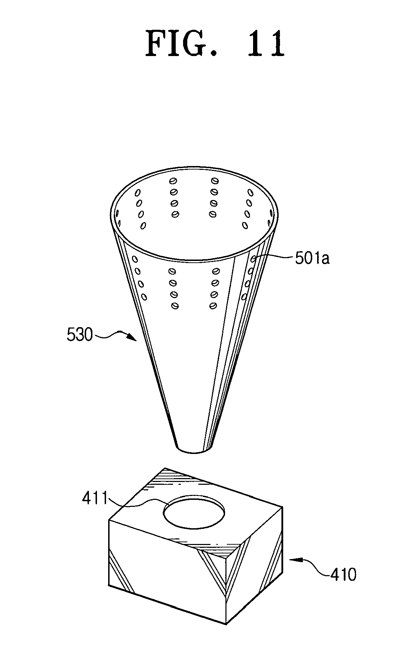

Although it is preferred that the cyclone body 110 includes the cylindrical part 111 and the taper part 118, the present invention is not limited to this structure. According to a fifth embodiment of the present invention, as shown in FIGS. 10 and 11, a duct collecting apparatus 500 includes a cyclone body 510 formed as an inverse cone. The screen 530 of the fifth embodiment is also formed as an inverse cone to correspond to the cyclone body 510. The screen 530 comprises a first part 532 having moisture passing holes 501a and a second part 534 without only moisture passing holes. The moisture passing holes 501a are preferably formed at the first part 532, that is, at the height H from the bottom of the dust receptacle 410 so as to prevent backflow of the moisture from the second space S2 to the first space S1. In this case, preferably, the first part 532 is disposed at a higher position than where more than 90% of the moisture separation is performed, so that the backflow of the moisture can be prevented without fail.

Additionally, as mentioned regarding the third embodiment, the electric heating coil 150 may be provided in the air inlet 515 of the dust collecting apparatus 500.

As described above, with the dust collecting apparatuses 100, 200, 300, 400, and 500 according to the present invention, because the moisture collected by the taper part is restrained from flowing back to a filter, blocking of the filter due to the moisture can be prevented. Accordingly, a uniform suction force of the vacuum cleaner can be maintained, without causing overload of the suction motor.

Furthermore, the screen improves the moisture separation efficiency. Therefore, the filter of the vacuum cleaner will not be easily blocked by unseparated moisture. As a result, the vacuum cleaner operates with uniform suction force, and the suction motor is not overloaded.

While the invention has been shown and described with reference to certain embodiments thereof, it will be understood by those skilled in the art that various changes in form and details may be made therein without departing from the spirit and scope of the invention as defined by the appended claims.

## Claims

1. A dust collecting apparatus, comprising:
a cyclone body which comprises a cylindrical part having an air inlet and an air outlet, and a taper part; and
a dust receptacle connected an end of the taper part of the cyclone body,
the taper part sloping in a manner that an inner diameter thereof reduces from the cylindrical part toward the dust receptacle.

2. The dust collecting apparatus of claim 1, further comprising a screen mounted in the cyclone body.

3. The dust collecting apparatus of claim 2, wherein the screen comprises:
a screen cylindrical part having a shape corresponding to the cylindrical part; and
a screen taper part having a shape corresponding to the taper part.

4. The dust collecting apparatus of claim 3, wherein the screen comprises a plurality of moisture passing holes.

5. The dust collecting apparatus according to any of claims 3 and 4, further comprising a dust-only receptacle mounted in the dust receptacle and connected to the screen taper part at one end.

6. The dust collecting apparatus according to any of claims 1 to 5, further comprising an electric heating member at the air inlet.

7. A dust collecting apparatus, comprising:
a cyclone body including a first space that spins air including dust and moisture, and a second space separating the moisture from the air; and
a dust receptacle including a moisture-only receptacle that collects the separated moisture, and a dust-only receptacle that collects the separated dust, the dust receptacle being connected to the cyclone body.

8. The dust collecting apparatus of claim 7, further comprising a screen mounted in the cyclone body, thereby dividing an inside of the cyclone body into the first and the second spaces, and having a plurality of moisture passing holes.

9. The dust collecting apparatus according to any of claims 7 and 8, further comprising an electric heating member mounted at the air inlet for heating the air being guided into the cyclone body through the air inlet.

10. A dust collecting apparatus comprising:
a cyclone body separating dust and moisture from external air and discharging the separated dust and moisture through an open lower end thereof;
a screen dividing an inside of the cyclone body into a first space for separating the dust and a second space for separating the moisture, and having a plurality of moisture passing holes; and
a dust receptacle connected to the lower end of the cyclone body,
the screen comprising a first part having the moisture passing holes on at least one part and a second part without only moisture passing holes, the second part being disposed under the first part.

11. The dust collecting apparatus of claim 10, wherein
the cyclone body comprises a cylindrical part including an air inlet for drawing in the external air and an air outlet for discharging dust-separated air, and a taper part disposed under the cylindrical part and having an inner diameter tapering toward the dust receptacle,
the first part is formed as a cylindrical pipe corresponding to the cylindrical part, and
the second part is formed as an inverse cone corresponding to the taper part.

12. The dust collecting apparatus according to any of claims 10 and 11, wherein the moisture passing holes are disposed at an upper portion of the first part spaced from a bottom of the dust receptacle by a predetermined height, where more than 90% of moisture separation is performed.

13. The dust collecting apparatus according to any of claims 10 and 11, wherein the moisture passing holes are arranged in 12 rows and 4 columns along a circumferential surface of the first part.

14. The dust collecting apparatus according to any of claims 10 to 13, wherein the cyclone body is wholly formed as an inverse cone, and the screen is also formed as an inverse cone corresponding to the cyclone body.

15. The dust collecting apparatus according to any of claims 10 to 14, wherein the first part is distanced from the bottom of the dust receptacle by a predetermined height to be disposed where more than 90% of moisture separation is performed through the moisture passing holes.

16. The dust collecting apparatus according to any of claims 10 to 15, further comprising an electric heating member mounted at the air inlet for heating the air being drawn into the cyclone body through the air inlet.
